# EUROPÄISCHE PATENTSCHRIFT

(11) **EP 2 913 728 B1**
(45) Veröffentlichungstag und Bekanntmachung des Hinweises auf die Patenterteilung: **14.12.2016**
(21) Anmeldenummer: 14157176.0
(22) Anmeldetag: 28.02.2014
(51) Int. Cl.: G05B 19/05, G05B 19/042

(54) **Verfahren zum Betrieb eines Automatisierungsgeräts sowie Automatisierungsgerät**
Method for operating an automation device and automation device
Procédé de fonctionnement d'un appareil d'automatisation et appareil d'automatisation

(43) Veröffentlichungstag der Anmeldung: 02.09.2015
(73) Patentinhaber: Siemens Aktiengesellschaft, 80333 München (DE)
(72) Erfinder: Pohlan, Rudolf, 76337 Waldbronn (DE)

(56) Entgegenhaltungen:
- US-B1- 7 089 530

## Beschreibung

Die Erfindung betrifft zuvorderst ein Verfahren zum Betrieb eines Automatisierungsgeräts beim Ausführen einer nach dem hier vorgeschlagenen Ansatz erstellten Automatisierungslösung. Die Erfindung betrifft im Weiteren auch ein Automatisierungsgerät und dessen Funktionalität.

Zur Automatisierung einer industriellen technischen Anlage sind durch einen Programmierer mittels einer üblicherweise als Entwicklungsumgebung bezeichneten Programmierumgebung ein oder mehrere Automatisierungsprogramme zu erstellen, die im Folgenden einzeln oder zusammen als Automatisierungslösung bezeichnet werden. Eine Erstellung einer solchen Automatisierungslösung erfolgt bekanntlich mit einem üblicherweise als Programmiergerät bezeichneten Gerät, bei dem es sich auch um einen Standardcomputer handeln kann. Die Erstellung der Automatisierungslösung basiert zumindest auf einer Messstellenbeschreibung, also einer Beschreibung der in der jeweiligen Anlage vorhandenen oder vorgesehenen Messstellen (Sensoren/Aktoren). Von solchen Messstellen sind analoge oder digitale Eingangswerte erhältlich, die einen jeweiligen momentanen Zustand der Anlage und/oder des auf der Anlage ablaufenden technischen Prozesses beschreiben.

Eine besondere Herausforderung bei der Erstellung einer Automatisierungslösung stellen die Daten- und Signalflüsse (Verschaltungen) zwischen einzelnen von der Automatisierungslösung umfassten automatisierungstechnischen Softwarebausteinen dar. Diese müssen heute aufwändig einzeln programmiert werden und entsprechend ist der auf eine solche Programmierung und ggf. die spätere Prüfung der Programmierung entfallende Anteil an den Engineering-Kosten recht groß. Die Vollständigkeit aller notwendigen Verschaltungen ist heute zudem schwer nachzuweisen.

Zudem ist ein selektives Inbetriebsetzen einzelner Messstellen heute dadurch wesentlich erschwert, dass die Beziehungen zu Nachbarmessstellen und zu den Grundfunktionen berücksichtigt und kontrolliert werden müssen.

Heute werden solche Verschaltungen weitgehend mit Hilfe der vom Leitsystemhersteller angebotenen Programmierwerkzeuge einzeln programmiert - textuell oder graphisch. Gemäß dem Programmierstandard IEC 61131-3 werden dafür Editoren für Kontaktplan (KOP, engl. Ladder Diagram LAD), Funktionsplan (FUP, engl. Function Block Diagram FBD), Strukturierten Text (ST, engl. Structured Text ST), Anweisungsliste (AWL, engl. Instruction List IL) sowie für verfahrenstechnische Aufgaben Editoren für Continuous Function Chart (CFC) und Sequential Function Chart (SFC) zur Verfügung gestellt.

Hinsichtlich der datentechnischen Verwaltung werden in den Programmeditoren aus Anwendersicht interne und programmexterne Verschaltungen nicht unterschieden. Insbesondere beim Laden der Programme müssen die externen Beziehungen berücksichtigt werden.

Softwaretechnische Planungswerkzeuge (CAx-Systeme) für industrielle Anlagen, zum Beispiel Anlagen der chemischen oder pharmazeutischen Industrie etc., bieten auch Programmierwerkzeuge für Messstellen und Technische Funktionen an. Diese unterscheiden sich aber nicht wesentlich von denen der Automatisierungsebene. Die Lesbarkeit für den Technologen/Verfahrenstechniker wird dahingehend verbessert, dass die Variablennamen weitgehend technologisch benannt werden.

Für die Beschreibung von Ablaufsteuerungen (Grundfunktionen, Technische Funktionen) wird heute - auch in der Norm ANSI/ISA-88 - auf Programmiersprachen für Automatisierungsgeräte verwiesen, in diesem Zusammenhang bevorzugt auf den Programmierstandard IEC 61131-3 Sequential Function Chart (SFC).

Automatisierungssysteme oder Laufzeitsysteme von Automatisierungsgeräten, die Verschaltungen auf technologischer Ebene verarbeiten, sind nicht bekannt. Verschaltungen werden herkömmlich entweder als Bausteincode ausgeführt oder interpretativ verarbeitet.

Aus der US 7,089,530 B1 ist ein Ansatz bekannt, bei dem Verbindungsobjekte zum Herstellen von Verbindungen zwischen Objekten, die Komponenten einer Automatisierungslösung darstellen, verwendet werden. Diese sollen zur Validierung der von einem Benutzer beim Erstellen einer Automatisierungslösung zwischen einzelnen Objekten hergestellten Verbindungen verwendet werden.

Wünschenswert wäre aus den genannten Gründen, die Abhängigkeiten zwischen den Messstellen untereinander und auch zu den Grundfunktionen besser kontrollieren und dies auch auf technologischer Ebene unterstützen zu können.

Eine Aufgabe der Erfindung besteht entsprechend darin, Möglichkeiten aufzuzeigen, die einen Programmierer bei der Erstellung einer Automatisierungslösung unterstützen. Dazu gehören ein beim Erstellen einer Automatisierungslösung ausgeführtes Verfahren zum Betrieb eines Programmiergeräts und ein Verfahren zum Betrieb eines Automatisierungsgeräts, nämlich ein Verfahren, welches ein Automatisierungsgerät im Zusammenhang mit der Ausführung einer nach dem hier vorgeschlagenen Ansatz erstellten Automatisierungslösung ausführt.

Die oben genannte Aufgabe wird erfindungsgemäß mit einem Verfahren zum Betrieb eines Automatisierungsgeräts mit den Merkmalen des Anspruchs 1 gelöst. Das Verfahren setzt voraus, dass mittels eines Programmiergeräts eine durch das Automatisierungsgerät ausführbare Automatisierungslösung erstellt wurde. Bei dem Programmiergerät handelt es sich um ein Gerät, zum Beispiel einen Standardcomputer, zum Erstellen einer Automatisierungslösung, wobei die Automatisierungslösung zur Automatisierung einer technischen Anlage bestimmt ist. Das Erstellen der Automatisierungslösung erfolgt mittels eines auf dem Programmiergerät ausgeführten Computerprogramms, nämlich einer ein oder mehrere Programmierwerkzeuge umfassenden Entwicklungsumgebung. Die Automatisierungslösung umfasst programmierte und auf jeweils einen Funktionseinheitentyp zurückgehende Funktionseinheiten, insbesondere ein Automatisierungsprogramm oder mehrere Automatisierungsprogramme, wobei das oder jedes Automatisierungsprogramm Softwareobjekte in Form von programmierten und auf jeweils einen Funktionseinheitentyp zurückgehende Funktionseinheiten umfasst und wobei zumindest einzelne Funktionseinheiten jeweils zumindest einen Eingangsparameter zur Übernahme eines Eingangswerts und zumindest einen Ausgangsparameter zur Ausgabe eines Ausgangswerts aufweisen. Bei einer Ausführung des Betriebsverfahrens wird zumindest ein Verbindungsobjekttyp spezifiziert, der für einen ersten und einen zweiten Funktionseinheitentyp eine Verbindung zwischen einer ersten Funktionseinheit und einer zweiten Funktionseinheit definiert. Bei der Erstellung der Automatisierungslösung werden in Bezug auf die den Funktionseinheiten zugrunde liegenden Funktionseinheitentypen Verbindungen zwischen einzelnen Funktionseinheiten hergestellt. Diese werden in Form von typkonform zu den jeweiligen Funktionseinheiten passenden Instanzen solcher Verbindungsobjekttypen erstellt.

Wenn auf diese Weise eine Automatisierungslösung erstellt wurde, erfolgt auch die Verarbeitung der Automatisierungslösung und die Ausführung der Automatisierungslösung auf eine spezielle Art und Weise. Dementsprechend wird die oben genannte Aufgabe erfindungsgemäß auch durch ein Verfahren zum Betrieb eines Automatisierungsgeräts mit den Merkmalen des Anspruchs 2 gelöst. Das Verfahren zum Betrieb eines Automatisierungsgeräts umfasst zur Ausführung einer nach dem Verfahren gemäß dem hier vorgeschlagenen Ansatz erstellten Automatisierungslösung die folgenden Schritte: Alle diejenigen von der Automatisierungslösung umfassten Funktionseinheiten, die entsprechend einer Verbindung zwischen jeweils zwei Funktionseinheiten entlang der Verbindung als Datenkonsumenten fungieren, werden in eine Programmliste eingetragen. Alle von der Automatisierungslösung umfassten Verbindungen werden in eine Verbindungsliste eingetragen. Jedem Eintrag der Programmliste wird entsprechend einer jeweils zugehörigen Verbindung eine Referenz auf einen jeweiligen Eintrag der Verbindungsliste zugeordnet. Bei der Ausführung der Automatisierungslösung wird die Programmliste sukzessive unter Kontrolle eines Laufzeitsystems des Automatisierungsgeräts abgearbeitet. Diese Abarbeitung der Programmliste umfasst eine Ausführung von Verbindungsregeln eines Verknüpfungsteils der jeweils referenzierten Verbindung und nach der Ausführung der Verbindungsregeln eine Ausführung eines Codes der jeweiligen Funktionseinheit. Die genannten Verfahrensschritte laufen automatisch ab. Die automatische Ausführung der Verfahrensschritte erfolgt zum Beispiel aufgrund einer entsprechenden Funktionalität eines Laufzeitsystems des Automatisierungsgeräts und unter Kontrolle des Laufzeitsystems. Das Laufzeitsystem ist ein auf dem Automatisierungsgerät ausgeführtes Computerprogramm. Das Erstellen der Programmliste und der Verbindungsliste sowie das Verbinden von Einträgen in der Programmliste mit Einträgen in der Verbindungsliste kann auch bereits durch eine auf dem Programmiergerät ablaufende Entwicklungsumgebung erfolgen. Auch wenn diese Schritte nicht durch das Automatisierungsgerät, also dessen Laufzeitsystem, ausgeführt werden, handelt es sich dennoch um ein Verfahren zum Betrieb des Automatisierungsgeräts, denn das Erstellen der Listen und das Verbinden von Einträgen dieser Listen bildet die Basis für die nachfolgend durch das Laufzeitsystem ausgeführten Verfahrensschritte und gehört damit auch zum Betrieb des Automatisierungsgeräts.

Insgesamt ist die Erfindung damit auch ein Automatisierungsgerät, das nach dem oben skizzierten Verfahren arbeitet. Das Automatisierungsgerät umfasst in an sich bekannter Art einen Speicher und eine Verarbeitungseinheit, also zum Beispiel einen als Verarbeitungseinheit fungierenden Mikroprozessor oder dergleichen. In den Speicher des Automatisierungsgeräts ist eine nach dem oben skizzierten Verfahren zur Automatisierung eines technischen Prozesses erstellte Automatisierungslösung ladbar oder geladen. In den Speicher ist ebenfalls das Laufzeitsystem des Automatisierungsgeräts geladen. Das Laufzeitsystem zeichnet sich gegenüber bisherigen Laufzeitsystemen durch zusätzliche Eigenschaften aus. Das Laufzeitsystem verwaltet eine Programmliste und zumindest eine Verbindungsliste, wobei in der Programmliste Referenzen auf ein oder mehrere von der Automatisierungslösung umfasste Funktionseinheiten gespeichert sind und wobei in der Verbindungsliste Referenzen auf ein oder mehrere von der Automatisierungslösung umfasste Verbindungen gespeichert sind. Bei der Ausführung der Automatisierungslösung durch das Automatisierungsgerät ist die Programmliste mittels der Laufzeitumgebung abarbeitbar und wird beim Betrieb des Automatisierungsgeräts abgearbeitet. Die Abarbeitung der Programmliste umfasst eine Ausführung von Verbindungsregeln eines Verknüpfungsteils einer aus der Programmliste jeweils referenzierten Verbindung und nach der Ausführung der Verbindungsregeln eine Ausführung eines Codes der jeweiligen Funktionseinheit.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens erfolgt während des Erstellens der Automatisierungslösung mittels der Entwicklungsumgebung automatisch durch die Entwicklungsumgebung beim Anbringen einer Verbindung an einer Funktionseinheit eine Typprüfung. Dies gewährleistet, dass eine Verbindung nur an eine passende Funktionseinheit gewissermaßen angeheftet werden kann. Fehlerhafte Verschaltungen innerhalb der Automatisierungslösung lassen sich damit von Anfang an verhindern.

Bei einer weiteren Ausführungsform des Verfahrens ist eine als Generator fungierende Softwarefunktionalität vorgesehen, die automatisch die jeweilige Automatisierungslösung analysiert und ebenfalls automatisch aufgrund des Ergebnisses der Analyse Einträge in der Programmliste und in der Verbindungsliste erzeugt sowie Verknüpfungen zwischen den Einträgen herstellt. Dieser Software-Generator kann Bestandteil der auf dem Programmiergerät ablaufenden Entwicklungsumgebung oder Bestandteil des Laufzeitsystems des Automatisierungsgeräts sein. Wenn der Software-Generator Bestandteil der Entwicklungsumgebung ist, erfolgt die Analyse und das automatische Erstellen der Listen und die automatische Verknüpfung von deren Einträgen im Zusammenhang mit dem sogenannten Herunterladen der Automatisierungslösung aus dem Speicher des Programmiergeräts in den Speicher des Automatisierungsgeräts. Das Herunterladen der Automatisierungslösung und damit der Start des Software-Generators werden dabei durch eine Bedienhandlung in Bezug auf die Entwicklungsumgebung ausgelöst. Wenn der Software-Generator Bestandteil des Laufzeitsystems des Automatisierungsgeräts ist, erfolgt die Analyse und das automatische Erstellen der Listen und die automatische Verknüpfung von deren Einträgen ebenfalls im Zusammenhang mit dem sogenannten Herunterladen der Automatisierungslösung aus dem Speicher des Programmiergeräts in den Speicher des Automatisierungsgeräts. Hier erfolgt der Start des Software-Generators durch das Laufzeitsystem, sobald dieses ankommende Daten als das Herunterladen einer Automatisierungslösung oder als das Herunterladen von Teilen einer Automatisierungslösung erkennt, insbesondere wenn das Laufzeitsystem erkennt, dass ein derartiges Herunterladen abgeschlossen ist.

Der Software-Generator trägt automatisch alle diejenigen von der Automatisierungslösung umfassten Funktionseinheiten, die entsprechend einer Verbindung zwischen jeweils zwei Funktionseinheiten entlang der Verbindung als Datenkonsumenten fungieren, in die Programmliste ein. Des Weiteren trägt der Software-Generator automatisch alle von der Automatisierungslösung umfassten Verbindungen in die Verbindungsliste ein. Schließlich ordnet der Software-Generator automatisch jedem Eintrag der Programmliste entsprechend einer jeweils zugehörigen Verbindung eine Referenz auf einen jeweiligen Eintrag der Verbindungsliste zu. Dies gewährleistet die Ausführbarkeit der Automatisierungslösung durch das Automatisierungsgerät und dessen Laufzeitsystem, ohne dass Bedienhandlungen des Programmierers oder sogar Benutzereingaben erforderlich sind.

Die oben genannte Aufgabe wird auch mit einem Automatisierungsgerät gelöst, zum Beispiel einem Automatisierungsgerät in Form eines Prozessrechners oder einer speicherprogrammierbaren Steuerung, das nach dem Verfahren wie hier und im Folgenden beschrieben arbeitet und dazu Mittel zur Durchführung des Verfahrens umfasst. Die Erfindung ist insoweit in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung oder ein Antriebssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem zur Steuerung und/oder Überwachung eines technischen Prozesses,
- FIG 2: eine schematisch vereinfachte Darstellung eines Automatisierungsgeräts mit einem Speicher und darin geladenen Funktionseinheiten einer Automatisierungslösung,
- FIG 3: eine schematisch vereinfachte Darstellung einer auf einem Programmiergerät ablaufenden Entwicklungsumgebung zur Erstellung einer Automatisierungslösung,
- FIG 4: eine graphische Darstellung eines Objekttyps als Basis für Verbindungen zwischen einzelnen von der Automatisierungslösung umfassten Funktionseinheiten,
- FIG 5: eine graphische Veranschaulichung einer Typprüfung, wie sie beim Anbringen einer Verbindung an Funktionseinheiten der Automatisierungslösung erfolgt und
- FIG 6: eine schematisch vereinfachte Darstellung eines Laufzeitsystems eines Automatisierungsgeräts, das zur Ausführung einer nach dem hier vorgeschlagenen Ansatz erstellten Automatisierungslösung bestimmt und eingerichtet ist.

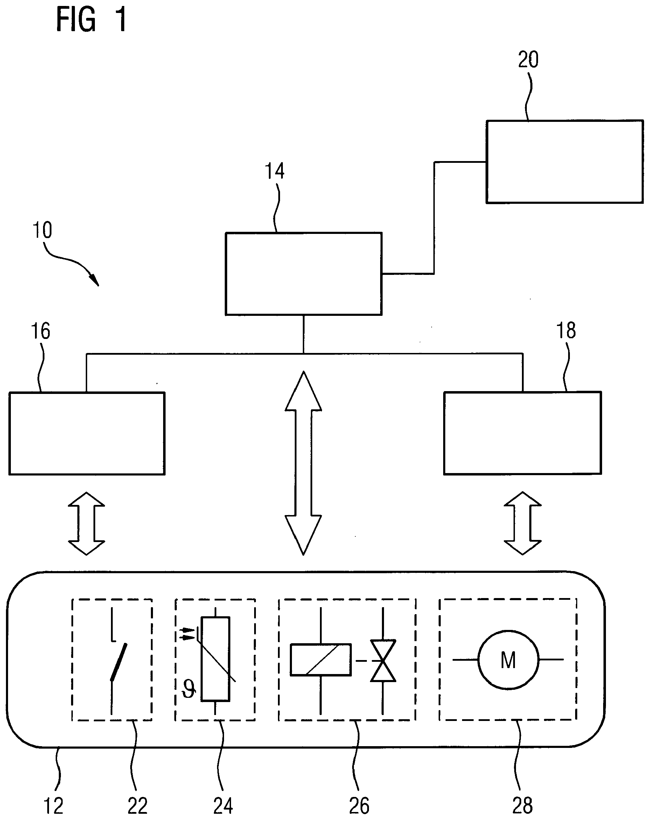

Die Darstellung in FIG 1 zeigt - in schematisch stark vereinfachter Form - ein Automatisierungssystem 10 zur Steuerung und/oder Überwachung eines nicht näher dargestellten technischen Prozesses 12 und der dafür jeweils vorgesehenen Anlage. Bei dem Prozess 12 handelt es sich zum Beispiel um einen technischen Produktionsprozess, insbesondere in Form eines Chargenprozesses, wie er sich zum Beispiel in der chemischen Industrie oder in der pharmazeutischen Industrie ergibt.

Das Automatisierungssystem 10 umfasst zumindest ein Automatisierungsgerät 14, 16, 18. Bei der gezeigten Situation umfasst das Automatisierungssystem 10 (lediglich exemplarisch) drei Automatisierungsgeräte 14-18, also ein erstes Automatisierungsgerät 14, ein zweites Automatisierungsgerät 16 und ein drittes Automatisierungsgerät 18, die untereinander kommunikativ über einen Bus, zum Beispiel über einen Feldbus, verbunden sind. Ein Programmiergerät 20 ist über den Bus oder in Form eines direkten Anschlusses mit allen oder einzelnen Automatisierungsgeräten 14-18 kommunikativ verbindbar.

Bei dem ersten Automatisierungsgerät 14 handelt es sich zum Beispiel um eine speicherprogrammierbare Steuerung, einen Prozessrechner oder dergleichen, die bzw. der hier als übergeordnetes Automatisierungsgerät fungiert. Beim zweiten und beim dritten Automatisierungsgerät 16, 18 handelt es sich zum Beispiel um weitere speicherprogrammierbare Steuerungen oder dezentrale Peripheriegeräte, die dem technischen Prozess 12 räumlich in geeigneter Art und Weise zugeordnet sind, um Zustände des technischen Prozesses 12 zu erfassen und/oder den technischen Prozess 12 zu beeinflussen. Bei der Erfassung von Zuständen des technischen Prozesses 12 werden in an sich bekannter Art und Weise Eingangsdaten aufgenommen. Bei der Beeinflussung des technischen Prozesses 12 werden in ebenfalls an sich bekannter Art und Weise auf Basis von Ausgangsdaten Steuersignale an den technischen Prozess 12 abgegeben. Beides ist durch die Blockpfeile zwischen den Automatisierungsgeräten 14, 16, 18 und dem technischen Prozess 12 veranschaulicht. Der technische Prozess 12 umfasst dafür in an sich bekannter Art und Weise einzelne Sensoren 22, 24 und Aktoren 26, 28. Als Sensoren sind - lediglich exemplarisch - ein zum Beispiel als Endschalter fungierender Schalter 22 und ein zur Erfassung eines Temperaturmesswerts vorgesehener temperaturabhängiger Widerstand 24 gezeigt. Als Aktoren 26, 28 sind - ebenfalls nur exemplarisch - ein Ventil 26 und ein Motor 28 gezeigt.

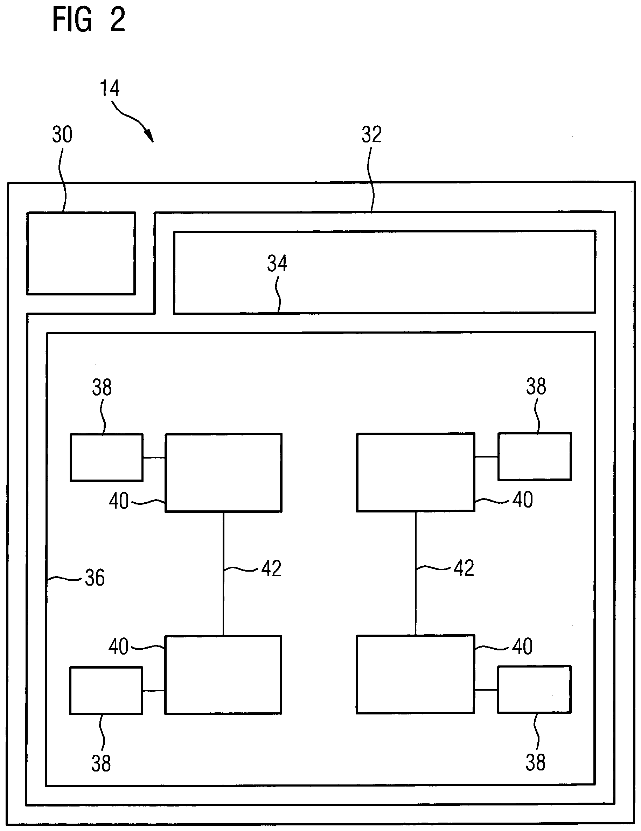

Die Darstellung in FIG 2 zeigt - ebenfalls schematisch stark vereinfacht - ein Automatisierungsgerät 14, also zum Beispiel das bei der in FIG 1 gezeigten Situation als übergeordnetes Automatisierungsgerät 14 fungierende erste Automatisierungsgerät 14. Die Beschreibung gilt aber für jegliche Art von Automatisierungsgerät 14-18 und unabhängig von dessen Funktion im jeweiligen Automatisierungssystem 10.

Das Automatisierungsgerät 14 umfasst in an sich bekannter Art und Weise eine Verarbeitungseinheit in Form von oder nach Art eines Mikroprozessors 30 sowie einen Speicher 32. In den Speicher 32 ist ein Laufzeitsystem 34 geladen. Das Laufzeitsystem 34 bestimmt die Ausführung einer ebenfalls in den Speicher 32 geladenen Automatisierungslösung 36. Die Automatisierungslösung 36 umfasst zumindest ein Automatisierungsprogramm 38 und das oder jedes Automatisierungsprogramm 38 korrespondiert mit einer technologischen Software-Funktionseinheit (im Folgenden kurz als Funktionseinheiten 40 bezeichnet), die in Software einzelne Anlagenteile, davon umfasste Aggregate sowie Sensoren 22, 24 und Aktoren 26, 28 des technischen Prozesses 12 repräsentieren.

Die Funktionseinheiten 40 sind Softwareobjekte in Form von Instanzen jeweils zugrunde liegender Objekttypen und als Objekttypen sind zumindest ein erster Objekttyp für Einzelsteuereinheiten, sogenannte Control Modules (CM), und ein zweiter Objekttyp für sogenannte Equipment Modules (EM) vorgesehen.

Beispiele für Einzelsteuereinheiten sind Ventil-, Motor- und Pumpensteuerungen sowie Regler und dergleichen. Eine jeweilige Funktion einer Einzelsteuereinheit wird in der Automatisierungslösung 36 in Form eines Programms gemäß dem IEC 61131-3-Standard realisiert. Auf der Gruppensteuerebene werden diese Einzelsteuereinheiten (Gerätesteuerungen) von sogenannten Grundfunktionen der technischen Einrichtungen (Equipment Modules; EM) im Sinne der Norm ANSI/ISA-88 für die Ablaufsteuerung der Anlage genutzt. Als Programmiersprachen für Einzelsteuereinheiten und Grundfunktionen sind gemäß dem IEC 61131-3-Standard Kontaktpläne (KOP), Funktionspläne (FUP), Strukturierter Text (ST), Anweisungslisten (AWL), CFC und SFC eingeführt. Parameter- und Signalverschaltungen sind programmiertechnische Zuweisungen von Bausteinvariablen. Sie definieren die Datenflüsse der Automatisierungslösung 36.

Beispielhaft soll für die weitere Erläuterung davon ausgegangen werden, dass der technische Prozess 12 als Bestandteil eines Dosierers (nicht gezeigt) ein Ventil 26 und als Bestandteil einer Transporteinrichtung (ebenfalls nicht gezeigt) einen Motor 28 umfasst. Als softwaretechnische Repräsentanten des Ventils 26 und des Motors 28 umfasst die Automatisierungslösung 36 zwei Funktionseinheiten 40 in Form von Einzelsteuereinheiten (Control Modules). Die jeweilige Ventilstellung soll das Ergebnis eines Regelungsprozesses sein, so dass das Ventil 26 des Dosierers proportional zu einer von dem Regler ausgegebenen Stellgröße geöffnet wird. Gleichfalls soll die Geschwindigkeit des Motors 28 Ergebnis eines Regelungsprozesses sein, so dass sich die Geschwindigkeit der Transporteinrichtung proportional zu einer von einem weiteren Regler ausgegebenen Stellgröße ergibt. Die beiden Regler werden innerhalb der Automatisierungslösung 36 ebenfalls als Funktionseinheiten 40 in Form von Einzelsteuereinheiten (Control Modules) realisiert. Die einzelnen Funktionseinheiten 40 müssen untereinander verschaltet werden, damit sich eine als Ergebnis des jeweils implementierten Regelungsalgorithmus resultierende Stellgröße auf den Repräsentanten des Ventils 26 sowie den Repräsentanten des Motors 28 und schließlich auf die tatsächlichen physikalischen Einheiten im technischen Prozess 12 auswirkt.

Die Grundlage für eine solche Verschaltung soll zunächst aus Sicht des Automatisierungsprogramms 38 betrachtet werden. Bekanntlich erlaubt die Spezifikation eines einem automatisierungstechnischen Softwareobjekt (Programm bzw. die darin enthaltenen Funktionen und/oder Funktionsbausteine) zugrunde liegenden Objekttyps (Programmtyps) eine Definition eines Eingangsparameters oder mehrerer Eingangsparameter (Eingangsparameterliste) sowie eine Definition eines Ausgangsparameters oder mehrerer Ausgangsparameter (Ausgangsparameterliste). Die hier betrachteten Funktionseinheiten 40 gehen ebenfalls auf einen jeweils zugrunde liegenden Objekttyp zurück, der wiederum mit einem Programmtyp korrespondiert, so dass auch die Funktionseinheiten 40 und die jeweils zugrunde liegenden Objekttypen indirekt eine Eingangs- und eine Ausgangsparameterliste umfassen bzw. diesen eindeutig zugeordnet werden können.

Die Elemente der Eingangsparameterliste und der Ausgangsparameterliste können symbolisch abstrakt wie folgt geschrieben werden:

| (Eingangsparameterliste) | (Ausgangsparameterliste) |
|---|---|
| | |
| BlockInput 1 | BlockOutput 1 |
| BlockInput 2 | BlockOutput 2 |
| BlockInput n | BlockOutput n |

Ein Eingangsparameter (BlockInput) bzw. ein Ausgangsparameter (BlockOutput) ist im Sinne des Automatisierungsprogramms 38 eindeutig spezifiziert durch den Programmnamen, den Bausteinnamen und den eigentlichen Bausteineingangs- bzw. -ausgangsnamen. Im Folgenden werden vereinfacht nur die Begriffe Bausteineingang (BlockInput) und Bausteinausgang (BlockOutput) verwendet.

Die Anzahl der von der Eingangs- und der Ausgangsparameterliste tatsächlich umfassten Eingangs- und Ausgangsparameter ist implementationsabhängig. Möglich sind kein Parameter, ein Parameter und mehrere Parameter.

Eine von einem Regelungsalgorithmus erzeugte Stellgröße eines in Form einer Funktionseinheit 40 von der Automatisierungslösung 36 umfassten Reglers wird zum Beispiel in Form des Ausgangsparameters "BlockOutput 1" zur Verfügung gestellt. Der jeweilige Wert der Stellgröße soll einer als Repräsentant des Motors 28 der Transporteinrichtung von der Automatisierungslösung 36 umfassten Funktionseinheit 40 zum Beispiel als dessen Eingangsparameter "BlockInput 1" zugeführt werden. Dies bedeutet die Verknüpfung eines Ausgangsparameters einer ersten Funktionseinheit 40 mit einem Eingangsparameter einer zweiten Funktionseinheit 40 und im Ergebnis eine Verbindung 42 (Verschaltung) der beiden Funktionseinheiten 40.

Symbolisch ließe sich die oben beschriebene Verschaltung in Form von Programmcode innerhalb der Automatisierungslösung 36 zum Beispiel wie folgt schreiben: "BlockInput 1 := BlockOutput 1".

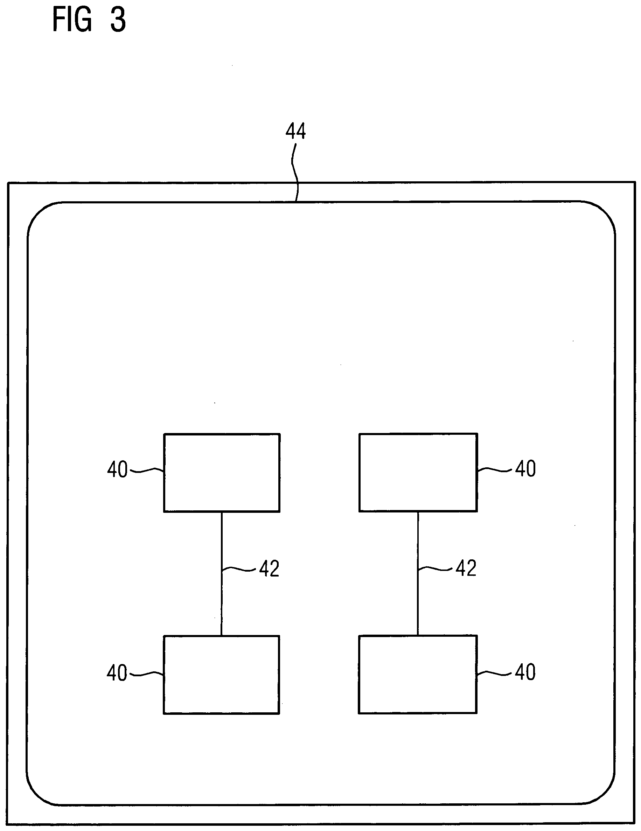

Die Darstellung in FIG 2 umfasst bereits eine Darstellung von Verbindungen 42 zwischen jeweils zwei Funktionseinheiten 40. Die Darstellung in FIG 2 zeigt den Inhalt des Speichers 32 des jeweiligen Automatisierungsgeräts 14. Demgegenüber zeigt die Darstellung in FIG 3 die Funktionseinheiten 40 und Verbindungen 42 zwischen einzelnen Funktionseinheiten 40 auch als Momentaufnahme einer graphischen Darstellung ("Screenshot"), wie sie von einer Entwicklungsumgebung 44 zur Erstellung einer Automatisierungslösung 36 während der Erstellung der Automatisierungslösung 36 erzeugt wird. Dass die Darstellungen des Speicherinhalts (FIG 2) und die Darstellung der Bildschirmanzeige der Entwicklungsumgebung 44 (FIG 3) übereinstimmen, ist bei der gewählten Abstraktionsebene kein Problem. Bei der Entwicklungsumgebung 44 handelt es sich in an sich bekannter Art und Weise um ein in den Speicher des zum Erstellen der Automatisierungslösung 36 verwendeten Programmiergeräts 20 geladenes Computerprogramm.

Es ist leicht vorstellbar, dass eine Herstellung einer Verschaltung von Funktionseinheiten 40 fehlerträchtig ist und dass fehlerhafte Verschaltungen bei einer Fehlersuche nur äußerst schwer zu finden sind.

Anhand des oben beschriebenen, allerdings stark vereinfachenden Beispiels (zwei Regler und zwei Aktoren 26, 28) ergibt sich, dass eine Verschaltung einer einen Regler darstellenden Funktionseinheit 40 zumindest die Verschaltung desjenigen Ausgangsparameters, durch den die nach dem jeweiligen Regelungsalgorithmus resultierende Stellgröße verfügbar gemacht wird, mit einem Eingangsparameter einer anderen Funktionseinheit 40 erfordern wird. Die beiden exemplarisch gewählten Aktoren (Ventil 26, Motor 28) erlauben eine Ansteuerung entsprechend einem Eingangswert: das Ventil 26 wird entsprechend dem jeweiligen Eingangswert geöffnet oder geschlossen oder eine Ventilklappe wird in eine einem bestimmten Öffnungsgrad entsprechende Position gebracht; die Geschwindigkeit des Motors 28 steigt oder fällt mit dem jeweiligen Eingangswert. Allgemein kann man solche Aktoren 26, 28 auch als "Positionierer" bezeichnen. Genauso, wie ein Regler die Verschaltung zumindest eines Ausgangsparameters mit einem Eingangsparameter einer weiteren Funktionseinheit 40 erfordert, erfordert auch ein solcher Positionierer die Verschaltung zumindest eines Eingangsparameters mit einem Ausgangsparameter einer weiteren Funktionseinheit 40.

Für die weitere Beschreibung wird im Interesse einer besseren Lesbarkeit nicht in jedem Falle darauf hingewiesen, ob es sich bei einzelnen Einheiten um Softwareobjekte handelt und dass diese das Ergebnis der Instanziierung eines jeweils zugrunde liegenden Objekttyps sind. Die Begriffe bezeichnen demnach je nach jeweiligem Sachzusammenhang entweder eine physikalische Einheit, zum Beispiel einen Motor 28 im technischen Prozess 12, oder einen Repräsentanten einer solchen Einheit in Form einer Funktionseinheit 40 (Control Module oder Equipment Module) der Automatisierungslösung 36 und gegebenenfalls auch einen einer solchen Funktionseinheit 40 zugrunde liegenden Objekttyp.

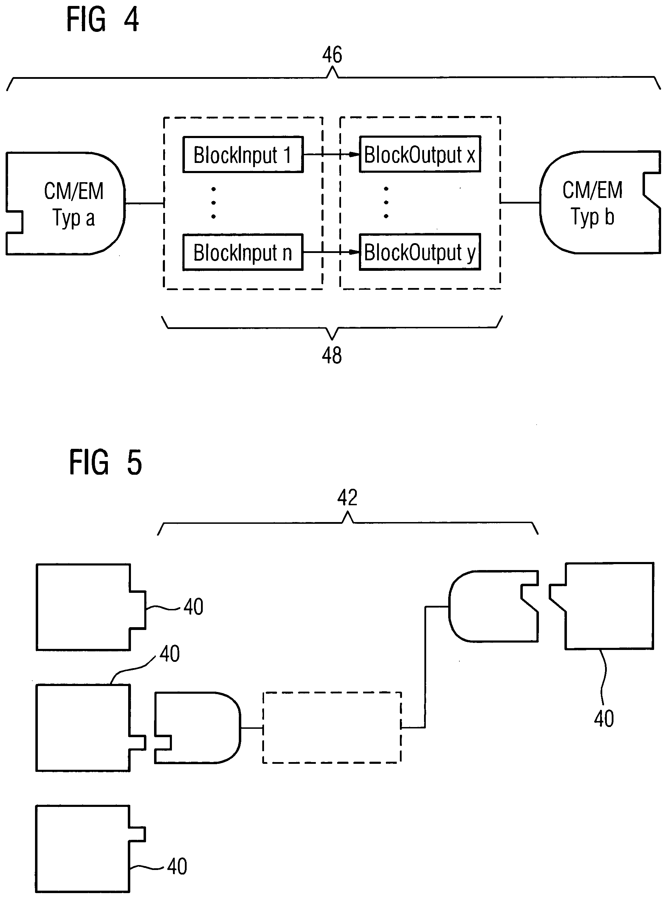

Eine einen Regler repräsentierende Funktionseinheit 40 lässt sich also sinnvoll mit einer ein Ventil 26 oder einen Motor 28 repräsentierenden Funktionseinheit 40 verschalten, wenn die oben erwähnten Ausgangs- und Eingangsparameter miteinander verknüpft werden. Die solchen Verschaltungen zugrunde liegende Struktur lässt sich mittels eines Softwareobjekts, das eine Instanz eines speziellen Verbindungsobjekttyps 46 (FIG 4) ist, darstellen. Die Verschaltung zweier Funktionseinheiten 40 erfolgt gemäß dem hier vorgestellten Ansatz mittels eines als Verbindung 42 fungierenden Verbindungsobjekts (die Begriffe Verbindung und Verbindungsobjekt werden im Folgenden synonym verwendet). Die jeweilige Verbindung 42 wird auf Basis eines Verbindungsobjekttyps 46 instanziiert und auf einer graphischen Benutzeroberfläche einer Entwicklungsumgebung 44 den dortigen Darstellungen zweier Funktionseinheiten 40 zugeordnet. Weil es sich bei der jeweiligen Verbindung 42 um die Instanz eines zugrunde liegenden Objekttyps (Verbindungsobjekttyp 46) handelt, kann bei der Zuordnung der Verbindung 42 zu den beiden Funktionseinheiten 40 eine Typprüfung erfolgen. Auf diese Weise ist sichergestellt, dass mit einer Verbindung 42 nur diejenigen Funktionseinheiten 40 verschaltbar sind, die gemäß dem der verwendeten Verbindung 42 jeweils zugrunde liegenden Verbindungsobjekttyp 46 zur Verschaltung mit dieser Verbindung 42 vorgesehen sind.

Ein einer Verbindung 42 zugrunde liegender Verbindungsobjekttyp 46 (FIG 4) definiert also die mittels der Verbindung 42 verbindbaren Funktionseinheiten 40, nämlich die den so verbindbaren Funktionseinheiten 40 jeweils zugrunde liegenden Objekttypen. Die jeweils verbindbaren Funktionseinheiten 40 fungieren dabei als Datenproduzent und als Datenkonsument. Sowohl beim Datenproduzent wie auch beim Datenkonsument handelt es sich um eine Funktionseinheit 40, also ein Control Module (CM) oder ein Equipment Module (EM), so dass im Folgenden einzelne Funktionseinheiten 40 entsprechend der jeweiligen Datenflussrichtung auch nur kurz als Datenproduzent 40 oder Datenkonsument 40 bezeichnet werden. Ein Datenproduzent 40 ist dabei eine Funktionseinheit 40, die Daten in Form von Ausgangsparametern zur Verfügung stellt. Ein Datenkonsument 40 ist entsprechend eine Funktionseinheit 40, die von einem Datenproduzenten 40 Daten in Form von Eingangsparametern erhält. Ein einer Verbindung 42 zugrunde liegender Verbindungsobjekttyp 46 definiert dafür auch die Verschaltung zumindest eines Ausgangsparameters eines Datenproduzenten 40 mit zumindest einem Eingangsparameter eines Datenkonsumenten 40.

Im Interesse einer besseren Lesbarkeit der weiteren Beschreibung wird als eine zugehörige Funktionseinheit 40 eine Funktionseinheit 40 bezeichnet, die mit einer anderen Funktionseinheit über eine Verbindung 42 verknüpft ist. Genauso wird im Folgenden ausgehend von einem Datenproduzenten 40 oder einem Datenkonsumenten 40 von einem zugehörigen Datenkonsumenten bzw. Datenproduzenten 40 gesprochen, wenn Datenproduzent 40 und Datenkonsument 40 über eine Verbindung 42 verknüpft sind.

Die Darstellung in FIG 4 zeigt dies in schematisch vereinfachter Form. Gezeigt ist eine graphische Veranschaulichung eines Verbindungsobjekttyps 46. Zu dem Verbindungsobjekttyp 46 gehört eine Spezifikation der mit der Verbindung 42 verbindbaren Funktionseinheiten 40 (Datenproduzent 40 und Datenkonsument 40). Die beiden mit einer Instanz des gezeigten Verbindungsobjekttyps 46 verbindbaren Funktionseinheiten 40, also der Datenproduzent 40 einerseits und der Datenkonsument 40 andererseits, sind in der Darstellung in Form der den Funktionseinheiten zugrunde liegenden Objekttypen symbolisch als "CM/EM Typ a" und "CM/EM Typ b" angegeben. Dies verdeutlicht, dass mit einer Verbindung 42 Funktionseinheiten 40 in Form von Control Modules (CM) und auch Funktionseinheiten 40 in Form von Equipment Modules (EM) verbindbar sind. Die unterschiedlichen Typen sind symbolisch als "Typ A" und "Typ B" angegeben. Die graphische Darstellung ist nicht willkürlich und soll mit den unterschiedlichen Randkonturlinien der Objekttypen des Datenproduzenten 40 und des Datenkonsumenten 40 veranschaulichen, dass eine auf diese Weise definierte Basis für Verbindungen 42 nur an bestimmte Funktionseinheiten 40 "passt", wie dies in der Darstellung in FIG 5 veranschaulicht ist.

Eine auf einem Programmiergerät 20 (FIG 1) zur Erstellung der Automatisierungslösung 36 ablaufende Entwicklungsumgebung 44 kann auf dieser Basis eine Zulässigkeit einer Verbindung 42 zweier Funktionseinheiten 40 prüfen. Dies erfolgt automatisch durch die Entwicklungsumgebung 44 für jede Verbindung 42, die auf einer von der Entwicklungsumgebung 44 dargestellten graphischen Benutzeroberfläche instanziiert wird und die aufgrund entsprechender Bedienhandlungen des Programmierers mit zumindest einer ebenfalls auf der graphischen Benutzeroberfläche dargestellten Funktionseinheit 40 verknüpft werden soll. Im Rahmen der dabei automatisch ablaufenden Prüfung wird ermittelt, ob die Verbindung 42 zur der jeweiligen Funktionseinheit 40 passt. Bei dieser Prüfung werden der der jeweiligen Funktionseinheit 40 zugrunde liegende Objekttyp und die Objekttypen, die mit der Verbindung 42 verbindbar sind, geprüft. Nur wenn eine Übereinstimmung des Objekttyps der jeweiligen Funktionseinheit 40 mit zumindest einem der mit der Verbindung 42 verbindbaren Objekttypen gegeben ist, lässt sich die Verbindung 42 im Rahmen der Darstellung auf der graphischen Benutzeroberfläche an eine Funktionseinheit 40 gewissermaßen anheften. Eine Verbindung 42, die auf diese Weise einseitig bereits mit einer Funktionseinheit 40 verbunden ist, lässt sich auf der gegenüberliegenden Seite nur noch mit einer Funktionseinheit 40 verbinden, der ein Objekttyp zugrunde liegt, der zu dem für das noch freie Ende der Verbindung 42 spezifizierten Objekttyp passt.

Auf diese Weise lässt sich bereits bei der mittels eines Programmiergeräts 20 erfolgenden Erstellung einer Automatisierungslösung 36 sicherstellen, dass Funktionseinheiten 40 in Form von Control Modules und Equipment Modules korrekt miteinander verbunden werden und nur korrekt miteinander verbindbar sind. Eine nicht vorgesehene Verbindung zweier Funktionseinheiten 40, also eine Verbindung zweier Funktionseinheiten 40, für deren zugrunde liegende Objekttypen es keinen passenden Verbindungsobjekttyp 46 gibt, ist nicht typisiert möglich. Dies gewährleistet einen korrekten Datenfluss innerhalb der Automatisierungslösung 36 und vermeidet ansonsten nur schwer auffindbare Programmierfehler. Mögliche Verbindungen 42 werden mittels benannter Verbindungsobjekttypen 46 spezifiziert. Die Definition von instanzspezifischen Verbindungen wird jedoch von dem Verfahren nicht gänzlich ausgeschlossen. In diesem Fall können Verbindungen jeweils für zwei Instanzen von Funktionseinheiten 40 speziell mit ihren Verknüpfungsteilen 48 festgelegt werden.

An einer Funktionseinheit 40 können, unabhängig davon, ob die jeweilige Funktionseinheit 40 als Datenproduzent 40 oder als Datenkonsument 40 fungiert, mehrere Verbindungen 42 anknüpfen. So können zum Beispiel unterschiedliche Verbindungsarten realisiert werden. Zurückkommend auf das weiter oben gewählte Beispiel mit einer Verbindung 42 zwischen einem Regler als Datenproduzent 40 und einem Motor 28 als Datenkonsument 40 kann auf diese Weise mittels einer ersten Verbindung 42 eine Weiterleitung der von dem Regler erzeugten Stellgröße an den Motor 28 und mit einer zweiten Verbindung 42 eine Weiterleitung zum Beispiel einer Fehlermeldung an den Motor 28 eingeplant werden, wobei mittels der Fehlermeldung zum Beispiel angezeigt wird, ob die Stellgröße verwendbar ist oder nicht. Selbstverständlich ist innerhalb einer Verbindung 42 auch die Übergabe mehrerer Parameter möglich, so dass das beschriebene Beispiel ein in der Praxis eher nicht vorkommendes, aber hier aus Gründen der Einfachheit gewähltes Szenario beschreibt.

Der Datenfluss über eine Verbindung 42 von einem Datenproduzenten 40 zum jeweils zugehörigen Datenkonsumenten 40 wird bereits bei der Spezifikation des zugrunde liegenden Verbindungsobjekttyps 46 festgelegt. Symbolisch ist dies in der Darstellung in FIG 4 in Form der Verknüpfung einzelner Eingangsparameter (BlockInput 1, ..., BlockInput n) mit jeweils einem Ausgangsparameter (BlockOutput x, ..., BlockOutput y) gezeigt. Die in der Darstellung gewählte Richtung des Pfeils zwischen jeweils einem Eingangsparameter und einem Ausgangsparameter meint, dass sich der Wert eines jeweiligen Eingangsparameters anhand des Wertes des in Bezug genommenen Ausgangsparameters ergibt. Die auf diese Weise definierte tatsächliche Verbindung einzelner Eingangs- und Ausgangsparameter stellt einen Verknüpfungsteil 48 des Verbindungsobjekttyps 46 dar. Bei einer Instanziierung einer Verbindung 42 auf Basis eines Verbindungsobjekttyps 46 werden automatisch durch die auf dem Programmiergerät 20 ablaufende Entwicklungsumgebung 44 anhand des Verknüpfungsteils 48 ausführbarer Code und/oder deskriptive Regeln als Bestandteil der Automatisierungslösung 36 erzeugt.

Die von dem Verknüpfungsteil 48 umfassten Verbindungsregeln (wiring rules) müssen nur einmal, nämlich bei der Spezifikation eines Verbindungsobjekttyps 46, festgelegt werden. Auch deshalb ergibt sich eine Vereinfachung bei der Erstellung einer Automatisierungslösung 36, weil der jeweils notwendige Datenfluss zwischen einzelnen Funktionseinheiten 40 nicht jedes Mal individuell ausprogrammiert werden muss.

Die von dem Verknüpfungsteil 48 umfassten Verbindungsregeln können auch bedarfsweise angepasst werden. Zum Testen einer Automatisierungslösung 36 oder von Teilen einer Automatisierungslösung 36 kann es zum Beispiel sinnvoll sein, wenn eine Funktionseinheit 40 über ihre Eingangsparameter mit ganz konkreten Eingangswerten versorgt wird, die sich im jeweiligen technischen Prozess 12 nicht ohne Weiteres realisieren lassen, zum Beispiel weil bestimmte Eingangswerte eine Fehler-oder sonstige Ausnahmesituation darstellen. Für eine solche Situation kann als Bestandteil des Codes eines Verbindungsobjekttyps 46 eine Zuweisung vorgegebener oder vorgebbarer numerischer oder alphanumerischer Werte an einen jeweiligen Eingangsparameter vorgesehen sein. Beispiele in dieser Hinsicht sind Verbindungsregeln, die bei einer Instanziierung eines Verbindungsobjekttyps 46 zu einer Verbindung 42 führen, bei der einzelnen oder mehreren Eingangsparametern feste Werte zugewiesen werden, zum Beispiel "BlockInput 1 := 1" oder "BlockInput 1 := 10" oder "BlockInput 1 := 110". In Abhängigkeit von dem jeweiligen Wert, mit dem die als Datenkonsument 40 fungierende Funktionseinheit 40 auf diese Weise versorgt wird, kann der Datenkonsument 40 auf einen korrekten Ablauf geprüft werden, wenn zum Beispiel ein Eingangsparameter mit einem Wert größer als einhundert eine Fehlersituation darstellt.

Die von dem Verknüpfungsteil 48 umfassten Verbindungsregeln können auch von im Rahmen der Spezifikation des Verknüpfungsteils 48 festgelegten Bedingungen abhängen. Auf diese Weise kann zum Beispiel geprüft werden, ob eine eingangsseitige Funktionseinheit 40 (Datenproduzent 40) Daten liefert oder ob keine Daten vorliegen, zum Beispiel weil die jeweilige Funktionseinheit 40 noch nicht Bestandteil der auf das Automatisierungsgerät 14 geladenen Automatisierungslösung 36 ist. Dann lassen sich zum Beispiel Verbindungsregeln wie folgt realisieren:
WENN ( BlockOutput 1 = 0) DANN
   BlockInput 1 = 47 ;
   BlockInput 2 = 12 ;
   BlockInput 3 = "Signal fehlt" ;
SONST
   BlockInput 1 = BlockOutput 3;
   BlockInput 2 = BlockOutput 1;
   BlockInput 3 = BlockOutput 2;

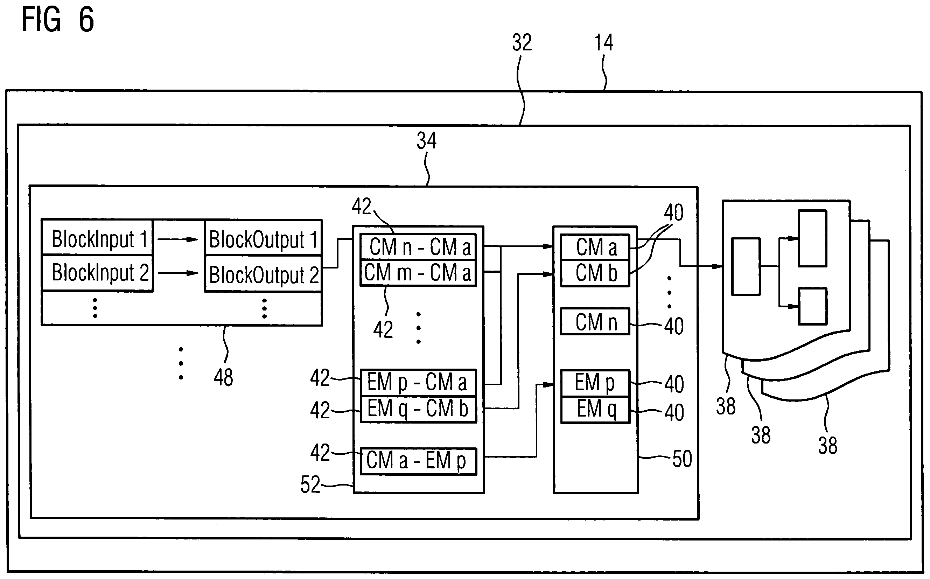

Die Beschreibung einer Ausführung einer Automatisierungslösung 36 mit auf diese Weise spezifizierten und mittels einer Entwicklungsumgebung 44 hergestellten Verbindungen 42 zwischen einzelnen von der Automatisierungslösung 36 umfassten Funktionseinheiten 40 erfolgt im Weiteren anhand der Darstellung in FIG 6.

FIG 6 zeigt zunächst schematisch vereinfacht die bereits in FIG 2 gezeigte und in den Speicher 32 des jeweiligen Automatisierungsgeräts 14 geladene Laufzeitumgebung 34. Diese umfasst - über die hier nicht gezeigten, herkömmlichen Funktionen eines Laufzeitsystems 34 für Automatisierungsgeräte 14 hinaus - zumindest eine Programmliste 50 und zumindest eine Verbindungsliste 52 oder mehrere Verbindungslisten (nicht gezeigt). Der Inhalt der Programmliste 50 entsteht, wenn aus einer Entwicklungsumgebung 44 (FIG 3) dort angelegte Funktionseinheiten 40 aus dem Speicher des jeweiligen Programmiergeräts 20 in den Speicher 32 des Automatisierungsgeräts 14 geladen werden und zwar unabhängig davon, ob nur einzelne (neue oder geänderte) Funktionseinheiten 40 oder eine komplette Automatisierungslösung 36 mit allen davon umfassten Funktionseinheiten 40 zum Automatisierungsgerät 14 übertragen werden.

Als Inhalt der Programmliste 50 sind in der Darstellung in FIG 6 symbolisch einzelne Control Modules ("CM a", "CM b", "CM n") und einzelne Equipment Modules ("EM p", "EM q") gezeigt. Die Programmliste 50 enthält nicht die Funktionseinheiten 40 selbst, sondern eine Referenz auf den Speicherort des zu jeder Funktionseinheit 40 gehörenden ausführbaren Codes, dem Automatisierungsprogramm 38, im Speicher 32 des Automatisierungsgeräts 14.

Bei der Ausführung der Automatisierungslösung 36 wird die Programmliste 50 unter Kontrolle des Laufzeitsystems 34 des Automatisierungsgeräts 14 abgearbeitet und in diesem Zuge wird sukzessive der ausführbare Code, auf den jeweils aus der Programmliste 50 gezeigt wird, ausgeführt. Vor der Ausführung des Codes einer jeden Funktionseinheit 40 ist eine Versorgung mit den jeweiligen Eingangsparametern erforderlich. Dies erfolgt auf Basis der bei der Erstellung der Automatisierungslösung 36 zwischen zwei Funktionseinheiten 40 definierten Verbindungen 42. Anhand der jeder Funktionseinheit 40 zugeordneten Verbindung 42 wird die Verbindungsliste 52 erstellt.

Die Verbindungsliste 52 enthält nicht selbst die von einer Verbindung 42 umfassten Verknüpfungen einzelner Eingangs- und Ausgangsparameter, sondern Referenzen auf einen Speicherort, an dem sich ausführbarer oder deskriptiv interpretierbarer Code als Implementation der von dem Verknüpfungsteil 48 umfassten Verbindungsregeln befindet. In der Darstellung in FIG 6 ist insoweit exemplarisch ein zu einer Verbindung 42 gehöriger Verknüpfungsteil 48 in der bereits im Zusammenhang mit der Darstellung in FIG 4 erläuterten Form gezeigt.

Beim Ausführen der jeweiligen Automatisierungslösung 36 auf einem Automatisierungsgerät 14 wird beim Abarbeiten der Programmliste 50 für jede darin enthaltene Funktionseinheit 40 geprüft, welche Verbindungen 42 auf diese Funktionseinheit 40 zeigen. Für jede zugehörige Verbindung 42 in der Verbindungsliste 52 wird deren Verknüpfungsteil 48 abgearbeitet, bevor der ausführbare Code der jeweiligen Funktionseinheit 40 selbst aufgerufen wird. Das Abarbeiten der von dem Verknüpfungsteil 48 jeweils umfassten Verbindungsregeln erfolgt dabei unter Kontrolle der Laufzeitumgebung 34 automatisch und interpretativ.

Auf diese Weise gelingt eine vollständige Entkopplung von externen Zuweisungen, also Zuweisungen, die den Datenfluss zwischen einzelnen jeweils als Datenproduzent 40 und Datenkonsument 40 fungierenden Funktionseinheiten 40 festlegen, und internen Zuweisungen, also Zuweisungen, die innerhalb einer jeweiligen Funktionseinheit 40 erfolgen. Solche internen Zuweisungen sind in FIG 6 auf der rechten Seite bei der symbolischen Darstellung der einzelnen Funktionseinheiten 40 gezeigt.

Die Programmliste 50 und die Verbindungsliste 52 sind das Ergebnis eines automatischen Generierungsvorgangs. Zur automatischen Generierung der Programmliste 50 und der Verbindungsliste 52 ist ein Generator in Form einer Softwarefunktionalität, die entweder als Teil der Entwicklungsumgebung 44 oder als Teil des Laufzeitsystems 34 realisiert ist, vorgesehen. Der Generator wertet dazu automatisch die von der Automatisierungslösung 36 umfassten Funktionseinheiten 40 und dazwischen jeweils bestehende Verbindungen 42 aus und erzeugt auf dieser Basis die Programmliste 50 und die Verbindungsliste 52. Eine Reihenfolge der Elemente der Programmliste 50 ergibt sich dabei aufgrund einer an sich bekannten Totzeitanalyse, so dass mit der Reihenfolge der Elemente in der Programmliste 50 sichergestellt ist, dass die einzelnen Funktionseinheiten 40 optimal mit Daten versorgt werden.

Mit der Ausführung des Verknüpfungsteils 48 der oder jeder auf eine Funktionseinheit 40 zeigenden Verknüpfung 42 ist beim Aufruf der jeweiligen Funktionseinheit 40 durch das Laufzeitsystem 34 sichergestellt, dass die Eingangsparameter der Funktionseinheit 40 zumindest mit definierten Werten versorgt sind. In der Programmliste 50 sind die von der Automatisierungslösung 36 umfassten Funktionseinheiten 40, zumindest die bereits in den Speicher 32 des Automatisierungsgeräts 14 geladenen Funktionseinheiten 40, entsprechend ihrer Eigenschaft als Datenkonsument 40 enthalten.

Wenn eine gemäß einer mittels der Entwicklungsumgebung 44 angelegten Verbindung 42 als Datenproduzent 40 vorgesehene Funktionseinheit 40 noch nicht in den Speicher 32 des Automatisierungsgeräts 14 geladen ist, werden anstelle der dann nicht zur Verfügung stehenden Ausgangsparameter des Datenproduzenten 40 den Eingangsparametern des zugehörigen Datenkonsumenten 40 Standardwerte (Default-Werte) zugewiesen. Solche Default-Werte können im Verknüpfungsteil 48 der jeweiligen Verbindung 42 angelegt sein oder vom Laufzeitsystem 34 zugewiesen werden, zum Beispiel wenn das Laufzeitsystem 34 automatisch feststellt, dass sich der jeweils referenzierte Datenproduzent 40 noch nicht im Speicher 32 des Automatisierungsgeräts 14 befindet. Auf diese Weise arbeitet jede bei der Abarbeitung der Programmliste 50 aufgerufene Funktionseinheit 40 entweder mit solchen Standardwerten oder mit den von dem oder jedem jeweiligen Datenproduzenten 40 erhaltenen Werten.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Es wird ein Verfahren für eine vereinfachte Parameter- und Signalflussverarbeitung auf technologischer Ebene angegeben. Die dabei zur Verknüpfung (Verschaltung) der von der Automatisierungslösung 36 umfassten Funktionseinheiten 40 basieren auf speziell definierten Verbindungsobjekttypen 46. Dies macht beim Anbringen von dazu instanziierten Verbindungen 42 (Verbindungsobjekten) an den Funktionseinheiten 40 (Funktionseinheitsobjekten) eine Typprüfung möglich und verhindert fehlerhafte Verknüpfungen. Durch einen einfachen Zuordnungsvorgang, nämlich ein "Anheften" an einer Funktionseinheit 40, können zwei Funktionseinheiten 40 in Form von Control Modules (CM) oder zwei Funktionseinheiten 40 in Form von Equipment Modules (EM) oder jeweils eine Funktionseinheit 40 in Form eines Control Modules (CM) und eine Funktionseinheit 40 in Form eines Equipment Modules (EM) verbunden und gleichzeitig der Datenfluss zwischen ihnen festgelegt werden. Die Verbindungen 42 beschreiben die externe Verschaltung der von der Automatisierungslösung 36 umfassten Funktionseinheiten 40. Dies sorgt vorteilhaft für eine Trennung der programminternen und externen Verschaltungen sowie für eine Entkopplung der Messstellen (Einzelsteuereinheiten) untereinander sowie zu den Grundfunktionen der Anlage. Die wesentlich einfachere Projektierung der dabei entstehenden Verschaltungen reduziert deutlich die Engineering-Kosten. Darüber hinaus können die Datenflüsse viel besser kontrolliert und die Übersichtlichkeit drastisch erhöht werden. Schließlich wird auch die Standardisierung von Automatisierungslösungen gefördert, indem mehr und mehr vordefinierte Automatisierungsprogramme für Control Modules (CM) und Equipment Modules (EM) inklusive der Definition von Verbindungsobjekttypen 46 - auch branchenspezifisch - als Bibliothek von Prozessleitsystemherstellern bereitgestellt werden können. Die Automatisierungsprogramme 38 der einzelnen Messstellen (Control Modules) sowie Grundfunktionen (Equipment Modules) können speziell auch in der Inbetriebsetzungsphase unabhängig voneinander und ohne externe Beziehungen berücksichtigen zu müssen auf das Automatisierungsgerät 14 geladen und getestet werden. Darüber hinaus können externe Verbindungen der Programme auch während des Betriebs der Anlage korrigiert, optimiert und einzeln nachgeladen werden. Ein weiterer Vorteil ergibt sich aus der technologischen Verwaltung der externen Verbindungen. Die Parameterübergabe und der Signalfluss innerhalb der Automatisierungslösung 36 werden auf eine technologische Ebene gehoben. Dies ermöglicht eine größere Transparenz auch für den Verfahrenstechniker. Eine Verteilung der Automatisierungslösung 36 auf mehrere Automatisierungsgeräte 14, 16, 18 wird wesentlich erleichtert, weil eine geräteübergreifende Kommunikation nicht gesondert betrachtet werden muss. Diese Verteilung kann vom Laufzeitsystem 34 vorteilhaft selbst übernommen werden.

Kurz gefasst werden ein Verfahren zum Betrieb eines Programmiergeräts 20 und eines Automatisierungsgeräts 14-18, wobei Verbindungen 42 zwischen Funktionseinheiten 40 einer Automatisierungslösung 36 auf Basis vordefinierter Verbindungsobjekttypen 46 angelegt werden, sowie ein Automatisierungsgerät mit einem Laufzeitsystem 34, das auf Basis der angelegten Verbindungen 42 erstellte Programm- und Verbindungslisten 50, 52 abarbeitet, angegeben.

## Patentansprüche

1. Verfahren zum Betrieb eines Automatisierungsgeräts (14, 16, 18) zur Ausführung einer Automatisierungslösung (36) zur Automatisierung einer technischen Anlage,
wobei die Automatisierungslösung (36) programmierte und auf jeweils einen Funktionseinheitentyp zurückgehende Funktionseinheiten (40) umfasst und mittels eines Programmiergeräts (20) erstellt wird und
**dadurch gekennzeichnet dass** bei der Erstellung der Automatisierungslösung (36) zumindest die folgenden Schritte durchgeführt werden:
- es wird zumindest ein Verbindungsobjekttyp (46) spezifiziert, der für einen ersten und einen zweiten Funktionseinheitentyp eine Verbindung (42) zwischen einer ersten Funktionseinheit (40) und einer zweiten Funktionseinheit (40) definiert und
- zwischen einzelnen Funktionseinheiten (40) werden Verbindungen (42) in Form von typkonform zu den jeweiligen Funktionseinheiten (40) passenden Instanzen solcher Verbindungsobjekttypen (46) hergestellt,
wobei beim Betrieb des Automatisierungsgeräts (14, 16, 18) zumindest die folgenden Schritte durchgeführt werden:
- alle diejenigen von der Automatisierungslösung (36) umfassten Funktionseinheiten (40), die entsprechend einer Verbindung (42) zwischen jeweils zwei Funktionseinheiten (40) entlang der Verbindung (42) als Datenkonsumenten (40) fungieren, werden in eine Programmliste (50) eingetragen,
- alle von der Automatisierungslösung (36) umfassten Verbindungen (42) werden in eine Verbindungsliste (52) eingetragen,
- jedem Eintrag der Programmliste (50) wird entsprechend einer jeweils zugehörigen Verbindung (42) eine Referenz auf einen jeweiligen Eintrag der Verbindungsliste (52) zugeordnet,
- bei der Ausführung der Automatisierungslösung (36) wird die Programmliste (50) sukzessive unter Kontrolle eines Laufzeitsystems (34) des Automatisierungsgeräts (14-18) abgearbeitet,
wobei die Abarbeitung der Programmliste (50) eine Ausführung von Verbindungsregeln eines Verknüpfungsteils (48) der jeweils referenzierten Verbindung (42) und nach der Ausführung der Verbindungsregeln eine Ausführung eines Codes der jeweiligen Funktionseinheit (40) umfasst.

2. Verfahren nach Anspruch 1, wobei beim Anbringen einer Verbindung (42) an einer Funktionseinheit (40) automatisch eine Typprüfung erfolgt.

3. Verfahren nach nach einem der Ansprüche 1 oder 2, wobei das Programmiergerät (20) bzw. das Automatisierungsgerät (14, 16, 18) eine als Generator fungierende Softwarefunktionalität umfasst,
- welche automatisch aufgrund einer durch den Generator erfolgenden automatischen Analyse der Automatisierungslösung (36)
- einerseits alle diejenigen von der Automatisierungslösung (36) umfassten Funktionseinheiten (40), die entsprechend einer Verbindung (42) zwischen jeweils zwei Funktionseinheiten (40) entlang der Verbindung (42) als Datenkonsumenten (40) fungieren, in die Programmliste (50) einträgt,
- andererseits alle von der Automatisierungslösung (36) umfassten Verbindungen (42) in die Verbindungsliste (52) einträgt sowie
- jedem Eintrag der Programmliste (50) entsprechend einer jeweils zugehörigen Verbindung (42) eine Referenz auf einen jeweiligen Eintrag der Verbindungsliste (52) zuordnet.

4. Automatisierungsgerät (14, 16, 18) mit einem Speicher (32) und einer Verarbeitungseinheit (30), wobei
- in den Speicher (32) eine zur Automatisierung eines technischen Prozesses (12) erstellte Automatisierungslösung (36) ladbar oder geladen ist,
- in den Speicher (32) ein Laufzeitsystem (34) des Automatisierungsgeräts (14-18) geladen ist,
**dadurch gekennzeichnet, dass**
- das Laufzeitsystem (34) eine Programmliste (50) und zumindest eine Verbindungsliste (52) verwaltet,
- in der Programmliste (50) Referenzen auf ein oder mehrere von der Automatisierungslösung (36) umfasste Funktionseinheiten (40) gespeichert sind,
- in der Verbindungsliste (52) Referenzen auf ein oder mehrere von der Automatisierungslösung (36) umfasste Verbindungen (42) gespeichert sind und
- bei der Ausführung der Automatisierungslösung (36) durch das Automatisierungsgerät (14-18) mittels des Laufzeitsystems (34) die Programmliste (50) abarbeitbar ist,
wobei die Abarbeitung der Programmliste (50) eine Ausführung von Verbindungsregeln eines Verknüpfungsteils (48) einer aus der Programmliste (50) jeweils referenzierten Verbindung (42) und nach der Ausführung der Verbindungsregeln eine Ausführung eines Codes der jeweiligen Funktionseinheit (40) umfasst.

5. Computerprogramm mit Programmcodemitteln, um alle Schritte von jedem beliebigen der Ansprüche 1 bis 3 durchzuführen, wenn das Computerprogramm auf einem Programmiergerät (20) oder einem Automatisierungsgerät (14, 16, 18) nach Anspruch 4 ausgeführt wird.

6. Automatisierungsgerät (14, 16, 18) mit einer
Verarbeitungseinheit (30) und einem Speicher (32), in den ein Computerprogramm nach Anspruch 5, nämlich ein Computerprogramm in Form eines Laufzeitsystems (34), geladen ist, das im Betrieb des jeweiligen Geräts (20, 14-18) durch dessen Verarbeitungseinheit (30) ausgeführt wird.

## Claims

1. Method for operating an automation device (14, 16, 18) for executing an automation solution (36) for automating a technical facility,
wherein the automation solution (36) comprises programmed functional units (40) tracing back to one functional unit type in each case and is prepared by means of a programming device (20) and
**characterised in that**
during the preparation of the automation solution (36) at least the following steps are performed:
- at least one connection object type (46) is specified, which defined a connection (42) between a first functional unit (40) and a second functional unit (40) for a first and a second functional unit type and
- connections (42) are established between individual functional units (40) in the form of instances of such connection object types (46) which are suitably compliant with the type of the respective functional units (40),
wherein during operation of the automation device (14, 16, 18) at least the following steps are performed:
- all of those functional units (40) comprised by the automation solution (36), which function according to a connection (42) between two functional units (40) in each case along the connection (42) as data consumers (40), are entered into a program list (50),
- all of the connections (42) comprised by the automation solution (36) are entered into a connection list (52),
- each entry of the program list (50) is assigned a reference to a respective entry of the connection list (52) according to a respectively associated connection (42),
- during the execution of the automation solution (36) the program list (50) is processed in stages under the control of a runtime system (34) of the automation device (14-18),
wherein the processing of the program list (50) comprises an execution of connection rules of a logic part (48) of the connection (42) referenced in each case and, following the execution of the connection rules, an execution of a code of the respective functional unit (40).

2. Method according to claim 1, wherein a type testing takes place automatically when a connection (42) is attached to a functional unit (40).

3. Method according to one of claims 1 or 2, wherein the programming device (20) or the automation device (14, 16, 18) comprises a software functionality functioning as a generator,
- which automatically, on the basis of an automatic analysis of the automation solution (36) taking place by means of the generator,
- on the one hand enters all of those functional units (40) comprised by the automation solution (36), which function according to a connection (42) between two functional units (40) in each case along the connection (42) as data consumers (40), into a program list (50),
- on the other hand enters all of the connections (42) comprised by the automation solution (36) into a connection list (52) and
- assigns each entry of the program list (50) a reference to a respective entry of the connection list (52) according to a respectively associated connection (42).

4. Automation device (14, 16, 18) with a memory (32) and a processing unit (30), wherein
- an automation solution (36) prepared for automating a technical process (12) can be loaded or is loaded into the memory (32),
- a runtime system (34) of the automation device (14-18) is loaded into the memory (32),
**characterised in that**
- the runtime system (34) manages a program list (50) and at least one connection list (52),
- references to one or more functional unit(s) (40) comprised by the automation solution (36) are saved in the program list (50),
- references to one or more connection(s) (42) comprised by the automation solution (36) are saved in the connection list (52) and
- the program list (50) can be processed by means of the runtime system (34) during the execution of the automation solution (36) by the automation device (14-18),
wherein the processing of the program list (50) comprises an execution of connection rules of a logic part (48) of a connection (42) referenced from the program list (50) in each case and, once the connection rules have been executed, comprises an execution of a code of the respective functional unit (40).

5. Computer program with computer code means for performing all steps of any of claims 1 to 3, if the computer program is executed on a programming device (20) or an automation device (14, 16, 18) according to claim 4.

6. Automation device (14, 16, 18) with a processing unit (30) and a memory (32), in which a computer program according to claim 5, namely a computer program in the form of a runtime system (34), is loaded, which is executed during the operation of the respective device (20, 14-18) by its processing unit (30).

## Revendications

1. Procédé pour faire fonctionner un appareil (14, 16, 18) d'automatisation pour l'exécution d'une solution (36) d'automatisation d'une installation technique,
dans lequel la solution (36) d'automatisation comprend des unités (40) fonctionnelles programmées et se rapportant respectivement à un type d'unité fonctionnelle et est élaborée au moyen d'un appareil (20) de programmation,
**caractérisé en ce que**
lors de l'élaboration de la solution (36) d'automatisation, on effectue au moins les stades suivants :
- on spécifie au moins un type (46) d'objet de liaison qui définit, pour un premier et un deuxième type d'unités fonctionnelles, une liaison (42) entre une première unité (40) fonctionnelle et une deuxième unité (40) fonctionnelle et
- on ménage entre diverses unités (40) fonctionnelles des liaisons (42) sous la forme d'instances, s'adaptant d'une manière conforme aux diverses unités (40) fonctionnelles, de type (46) d'objet de liaison de ce genre,
dans lequel, lors du fonctionnement de l'appareil (14, 16, 18) d'automatisation, on effectue au moins les stades suivants :
- on enregistre dans une liste (50) de programme toutes les unités (40) fonctionnelles comprises par la solution (36) d'automatisation qui, conformément à une liaison (42) entre respectivement deux unités (40) fonctionnelles, servent le long de la liaison (42) de consommateurs (40) de données et
- on enregistre dans une liste (52) de liaison toutes les liaisons comprises par la solution (36) d'automatisation,
- à chaque enregistrement de la liste (50) de programme, on associe, conformément à une liaison (42) associée respectivement, une référence à l'enregistrement respectif de la liste (52) de liaison,
- lors de l'exécution de la solution (36) d'automatisation, on exécute la liste (50) de programme successivement sous le contrôle d'un système (34) de temps d'exploitation de l'appareil (14 à 18) d'automatisation,
dans lequel l'exploitation de la liste (50) de programme comprend une réalisation de règles de liaison d'une partie (48) de combinaison de la liaison (42) référencée respectivement et, après la réalisation des règles de liaison, une exécution d'un code de l'unité (40) fonctionnelle respective.

2. Procédé suivant la revendication 1, dans lequel un contrôle de type s'effectue automatiquement lors de l'application d'une liaison (42) à une unité (40) fonctionnelle.

3. Procédé suivant l'une des revendications 1 ou 2, dans lequel l'appareil (20) de programmation ou l'appareil (14, 16, 18) d'automatisation comprend une fonctionnalité logicielle servant de générateur,
qui, automatiquement, sur la base d'une analyse automatique s'effectuant par le générateur de la solution (36) d'automatisation,
- enregistre dans la liste (50) de programme, d'une part, toutes les unités (40) fonctionnelles comprises par la solution (36) d'automatisation qui, conformément à une liaison entre respectivement deux unités (40) fonctionnelles le long de la liaison (42) servent de consommateurs (40) de données,
- d'autre part, enregistre dans la liste (52) de liaison toutes les liaisons (42) comprises par la solution (36) d'automatisation,
- associe à chaque enregistrement de la liste (50) de programme, conformément à une liaisons (42) associée, respectivement une référence à une entrée respective de la liste (52) de liaison.

4. Appareil (14, 16, 18) d'automatisation ayant une mémoire (32) et une unité (30) de traitement dans lequel
- une solution (36) d'automatisation, élaborée pour l'automatisation d'un processus (12) technique, peut être chargée dans la mémoire (32) ou est chargée dans la mémoire (32),
- un système (34) de temps d'exploitation de l'appareil (14 à 18) d'automatisation est chargé dans la mémoire (32),
**caractérisé en ce que**
- le système (34) de temps d'exploitation gère une liste (50) de programme et au moins une liste (52) de liaison,
- dans la liste (50) de programme sont mémorisées des références à une ou à plusieurs unités (40) fonctionnelles comprises par la solution (36) d'automatisation,
- dans la liste (52) de liaison sont mémorisées des références à une ou à plusieurs liaisons (42) comprises par la solution (36) d'automatisation, et
- lors de l'exécution de la solution (36) d'automatisation par l'appareil (14 à 18) d'automatisation, la liste (50) de programme peut être exécutée au moyen du système (34) de temps d'exploitation,
dans lequel l'exécution de la liste (50) de programme comprend une exécution de règles de liaison d'une partie (48) de combinaison d'une liaison (42) référencée respectivement dans la liste (50) de programme et, après l'exécution des règles de liaison, une exécution d'un code de l'unité (40) fonctionnelle respective.

5. Programme d'ordinateur ayant des moyens de code de programme pour effectuer tous les stades de n'importe laquelle des revendications 1 à 3, lorsque le programme d'ordinateur est exécuté sur un appareil (20) de programmation ou sur un appareil (14, 16, 18) d'automatisation suivant la revendication 4.

6. Appareil (14, 16, 18) d'automatisation ayant une unité (30) de traitement et une mémoire (32) dans laquelle est chargé un programme d'ordinateur suivant la revendication 5, à savoir, un programme d'ordinateur sous la forme d'un système (34) de temps d'exécution qui est exécuté en fonctionnement de l'appareil (20, 14 à 18) respectif par son unité (30) de traitement.
